# EUROPÄISCHE PATENTANMELDUNG

(11) **EP 0 639 406 A1**
(43) Veröffentlichungstag der Anmeldung: **22.02.1995**
(21) Anmeldenummer: 93112700.5
(22) Anmeldetag: 07.08.1993
(51) Int. Cl.: B03B 9/06, B29B 17/02

(54) **Verfahren und Vorrichtungen zum Aufbereiten von Magnetbandkassetten**

(71) Anmelder: BASF Magnetics GmbH, D-68165 Mannheim (DE)
(72) Erfinder: Mueller, Norbert, Dr., D-67159 Friedelsheim (DE); Eberhard, Joachim, D-77971 Kippenheim (DE); Eicher, Jochen, Dr., D-67731 Otterbach (DE); Hainisch, Norbert, D-77731 Willstaett (DE); Schulze, Axel-Ruediger, Dr., D-77654 Offenburg (DE); Sator, Karl-Heinz, Dr., D-77743 Neuried (DE)
(74) Vertreter: Karau, Wolfgang, Dr.

(57) **Zusammenfassung**

Verfahren und Vorrichtungen zum Aufbereiten von Magnetbandkassetten (5) für eine Wiederverwertung der Einzelteile bestehen im Öffnen des Gehäuses (3), Trennen von Bandwickel (n)(21) und Metallteilen und getrenntem Aufbereiten der Kunststoffteile, des Magnetbandes und der Metallteile. Spezielle Öffnungseinrichtungen (11) bewirken einfache Öffnungsvorgänge des Gehäuses (3). Material-Identifizierungseinrichtungen (7) können die Aufbereitung materialgerecht steuern. Alle Magnetbandkassetten (5) mit wenigstens einer Spule sind aufbereitbar.

## Beschreibung

Die Erfindung betrifft ein Verfahren und Vorrichtungen zum Aufbereiten von Magnetbandkassetten für eine Wiederverwendung der Einzelteile, wobei die Magnetbandkassetten im wesentlichen aus einem Kunststoffgehäuse, zumindest einem Bandwickel oder einer Bandspule sowie Metallteilen besteht.

Bekannt sind Verfahren zur Wiederverwertung von Magnetbandabfällen. Hierzu ist beispielsweise in der DE-OS 33 41 608 beschrieben, Magnetbandabfälle in kleine Stücke zu zerschneiden, diese mit wäßriger alkalischer Lösung zu behandeln und durch schnelles Rühren in Stücke aus Substratband (Folie) und Magnet-Material zu trennen.

Folien-Stücke und Magnet-Material werden unterschiedlichen Wiederverwertungs-Produktionszweigen zugeführt.

Für Einwegkassetten von Fotokopiergeräten ist es bekannt (DE-A-28 11 581), die Kassetten zerstörungsfrei in ihre Einzelteile zu zerlegen, das verbrauchte Farbband gegen ein neues auszutauschen und die Kassette erneut zu einer Einheit zusammenzusetzen. Diese Verfahrensweise ist für Magnetbandkassetten aufgrund notwendiger Präzision der Einzelteile beim erneuten Gebrauch der Kassette nicht anwendbar.

Zum Öffnen von Videobandkassetten ist es aus der US-A-4 765 050 bekannt, eine Durchdrückvorrichtung von nicht sichtbaren Verbindungselementen zusammen mit einer Schabloneneinrichtung zu verwenden.

Vorliegender Erfindung liegt die Aufgabe zugrunde, Verfahren und Vorrichtungen zu entwickeln, durch die komplette Magnetbandkassetten, die nicht mehr brauchbar sind, wiederverwertet werden können, wobei eine Auftrennung in möglichst einheitliche Werkstoffe oder Stoffgruppen anzustreben ist.

Die Aufgabe wird nach der Erfindung verfahrensgemäß gelöst durch die Verfahrensschritte
A) Öffnen des Gehäuses zumindest in der Nähe des Bandwickels oder der Bandspule
B) Trennen des Gehäuses von dem zumindest einen Bandwickel oder der Bandspule
C) Trennen des Bandwickels oder der Bandspule in Magnetband und Wickelkern- oder Spulenkörper
D) Trennen der Metallteile vom Gehäuse und von dem Bandwickel oder der Bandspule.
E) Getrenntes Aufbereiten des Gehäuses, des Magnetbandes und der Metallteile.

Dadurch wird eine vorteilhafte Vorbereitung der Kassetten zu einem anschließenden Aufbereiten der Einzelteile für die Wiederverwertung erreicht.

Eine Vorrichtung zur Durchführung des Verfahrens besteht im wesentlichen aus den folgenden Teilen:
jeweils einer Einrichtung
- zum Öffnen des Gehäuses
- zum Entnehmen der Bandwickel bzw. -spulen aus dem Gehäuse
- zum Trennen der Kassettenteile in Magnetband, Kunststoffteile und Metallteile
- zum Trennen des Bandwickels oder der Bandspule vom Wickelkern bzw. Spulenkern und den Spulenflanschen und
- zum Aufbereiten des Magnetbandes, der Kunststoffteile und der Metallteile.

Den Verfahrensschritten kann vorteilhaft noch der Verfahrensschritt Identifizieren des Gehäuse-Materials hinzugefügt, insbesondere den anderen Verfahrensschritten vorgeschaltet, sein.

Außerdem, wenn ein Etikett aus einem anderen Material als das Gehäuse vorhanden ist, ist zweckmäßig noch der Verfahrensschritt, Trennen des zumindest einen Etiketts vom Gehäuse, vorgesehen. Das Öffnen des Gehäuses erfolgt vorteilhaft mit einer Stanzvorrichtung zum gleichzeitigen Lösen aller Verbindungselemente, insbesondere der Verbindungsschrauben.
Weitere Einzelheiten der vorstehend angegebenen Verfahren und der Vorrichtungen sind anhand eines in der Zeichnung dargestellten Ausführungsbeispiels nachfolgend beschrieben.

In der Zeichnung zeigen:
- Figur 1: eine Vor- und Aufbereitungsanlage für Magnetbandkassetten (schematisch)
- Figur 2: eine Öffnungsvorrichtung für verschraubte oder vernietete Kassetten.

Eine Aufbereitung der wiederzuverwertenden Audio- oder Videokassetten ist, grob gesagt, die Umkehr der Montageschritte bei der Herstellung. Die jeweilige Kassette wird auf einer Montageeinrichtung gehalten, die Gehäuseschrauben werden gelöst oder durch Aufbohren oder Ausstanzen, wie noch weiter unten beschrieben, entfernt, die obere Gehäusehälfte wird abgenommen und alle Einzelteile werden einzeln entnommen und einer Wiederverwertung zugeführt, wobei Bandspule und Wickelkern voneinander getrennt werden können. Für die Durchführung der einzelnen Verfahrensschritte können für die Montage eingesetzte, automatisch oder halbautomatisch arbeitende Vorrichtungen verwendet werden, gegebenenfalls ergänzt durch gesteuerte Bohr- bzw. Stanz- bzw. Sägegeräte.

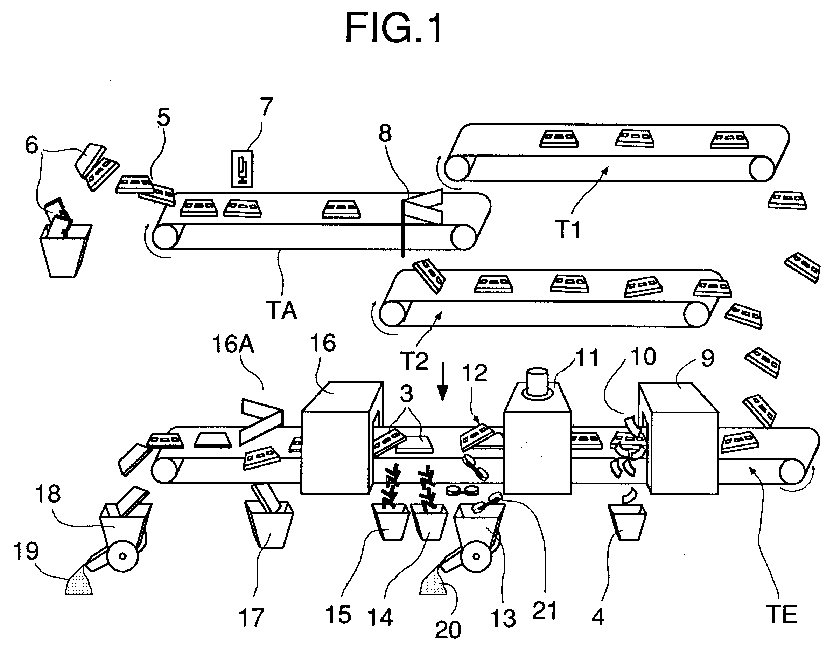

Anhand der in Figur 1 dargestellten Anlage werden Verfahrensschritte und dazugehörige Vorrichtungen beschrieben. Die zu verarbeitenden Videokassetten 5 werden eingangs von ihrem Schuber 6 befreit, der je nach Material, Pappe oder Kunststoff, separat vernichtet oder wiederaufbereitet wird. Auf dem Eingangslaufband TA wird die hüllenlose. sonst aber vollständige Kassette 5 transportiert. Dabei kann die erste Station eine Material-Identifizierungsvorrichtung 7 sein, wenn verschiedene Kunststoff-Gehäusematerialien aufbereitet werden sollen. Die Identifizierungsvorrichtung 7 enthält generell eine Prüfeinrichtung und eine Erfassungseinrichtung, wobei die erstere chemisch oder physikalisch arbeiten kann, um das Material zu charakterisieren, und die Erfassungseinrichtung die angebrachte Charakterisierung aufnimmt oder die Erkennung eines optisch oder magnetisch außen angebrachten Codes optisch bzw. magnetisch vornimnmt. Durch die Trennvorrichtung 8 werden die Kassetten 5 je nach ihrer erfaßten Materialart auf zwei verschiedene Laufbänder T1 und T2 gefördert. Schematisch ist nun dargestellt, daß beide Kassetten 5 wieder auf ein gemeinsames Laufband TE zur Weiteraufbereitung zusammengefaßt werden. Das ist lediglich aus Gründen der Darstellungsvereinfachung der Fall: selbstverständlich durchläuft jede der Kassetten 5 vom Laufband T1 eine anders geartete Aufbereitung als jene Kassetten 5 vom Laufband T2.

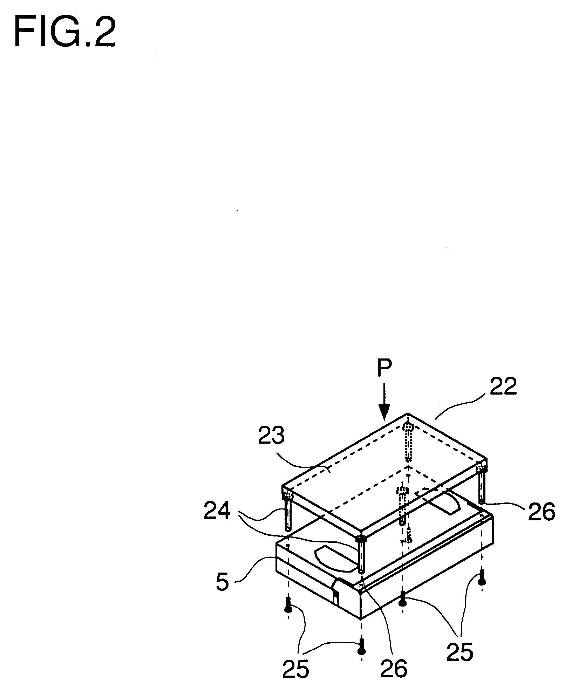

Die erste Station auf dem Band TE ist eine Trennvorrichtung 9 für Etiketten 10, die z.B. aus Papier oder Pappe, also einem anderen als dem Gehäuse-Material, bestehen. Die Vorrichtung 9 kann mechanisch durch Abschälen, Abfräsen oder Abbürsten die Etiketten 10 ablösen. Als Hilfsmittel kann ein Aufwärmen oder Abkühlen, je nach verwandtem Klebemittel, dienlich sein. Die Etiketten 10 fallen in einen Behälter 4 und werden vernichtet oder materialabhängig wieder aufbereitet. Die nächste Station ist nun die Öffnungseinrichtung 11, die aus einer Stanzeinrichtung 22 zum Entfernen der Schrauben 25, vgl. Figur 2, bestehen kann, aber auch als Sägeeinrichtung ausgebildet sein kann, die die Kassette 5, z.B. in einer der Mittelebenen des Gehäuses 3 trennt, so daß die Bandwickel oder Bandspulen 21 zugänglich werden und vom Gehäuse 3 trennbar sind. Zu diesem Trennvorgang kann z.B. eine Greifvorrichtung (nicht dargestellt) benutzt werden, oder ein menschlicher "Trenner" (gekennzeichnet durch einen Pfeil in Figur 1) bewerkstelligt diesen Vorgang, bei dem die Bandspulen 21 aus den geöffneten Gehäusen 3 entfernt und in einem Behälter 13 gesammelt werden. Die Trenn-Automatik oder -Person entnimmt auch die Kunststoff- und/oder Metallteile aus den Gehäuseteilen 3, wobei die Teile in Behältern 15 bzw. 14 separiert werden. Die folgende Station 16 prüft die Gehäuse 3 daraufhin, ob noch Metallteile enthalten sind, so daß über die Folge-Trennvorrichtung die metallhaltigen Gehäuseteile 3 in Behälter 17 abgezweigt werden, die z.B. einer Nachbehandlung unterzogen werden. Die metallfreien Gehäuseteile 3 werden schließlich in die Sammelbehälter 18 gefördert.

Die Einrichtung 11 zum Öffnen und Trennen der Kassette 5 von den Spulen 21 kann auch als Stanz-, Fräs- oder Lochsägeeinrichtung ausgebildet sein, so daß das Gehäuse der Kassette 5 um jeden Bandwickel bzw. Bandspule 21 herum kreisförmig abgetrennt wird. Die Öffnungseinrichtung 11 kann wie schematisch in Figur 2 gezeigt, aus einem Trageteil 23 mit Durchdrückzapfen 24 für die Schrauben 25 bestehen, das mit der Kraft P zwischen ca. 200 und 1000 kp, vorzugsweise zwischen etwa 300 und 600 kp, die Schrauben 25 aus dem Gehäuse 3 herausdrückt. Mit 26 sind konische Vertiefungen an den Enden der Zapfen 24 bezeichnet, die sicherstellen, daß die Schraubenenden getroffen und die Schrauben 25 möglichst geradlinig herausgedrückt werden. Die Zapfen 24 sollten als minimalen Durchmesser den Schraubenkopf-Durchmesser aufweisen. Es ist auch möglich, die Schrauben 25 von ihrer Kopfseite herauszudrücken. Ebenso lassen sich vernietete Kassetten 5 öffnen.

Betreffend die Bandwickel oder Bandspulen 21 ist es auch möglich, die mittleren Wickelkerne oder Spulenteile auszustanzen, auszubohren oder auszusägen, so daß Kunststoff-Material und Magnetband noch weiter trennbar sind.

In Laufrichtung des Pfeils 7 gesehen hinter der Öffnungseinrichtung 11 werden die Einzelteile der Kassette 3, die aus Kunststoff bestehen: Gehäuseteile 3, Kunststoff-Kleinteile (Strichlinie 27) und gegebenenfalls Wickelkern oder Spulenteile (Strichlinie 28) der Kunststoffwiederverwertung zugeführt, die z.B. in einer Aufmahlung besteht, s. die Mühlen am Behälter 13 und 18. Durch Mahlen kann das Kunststoff-Recyclat als Granulat 19 erhalten werden, es kann somit als Granulat oder auch nach Einschmelzen direkt einem Spritzgußvorgang zur Herstellung neuer Kassettengehäuse zugeführt werden.

Die Metallteile können ebenfalls als Metallschrott wieder in den Herstellungsprozeß von Schrauben, Zapfen oder Hülsen zurückgeführt werden.

Das lose oder aufgewickelte Magnetband der Bandspulen 21 kann für die Weiterverarbeitung nach einem Verfahren, wie beispielsweise eingangs geschildert, behandelt werden.

Bei einem weiteren Verfahren kann das Bandmaterial mit einem an die Bandform (Spulen, loses Band, Scheiben, Folienstücke, Folien etc.) angepaßten Zufuhrsystem einer ein- bzw. mehrstufigen Zerkleinerung unterworfen sein (s. Mühle am Behälter 13). Das zerkleinerte Material kann dann in einer bzw. mehreren Stufen verdichtet werden. Danach kann das Produkt durch Reib- und Scherkräfte bis in den Schmelzbereich belastet und plastifiziert werden. Das Ansintern und Schmelzen des Materials kann durch Zuführung thermischer Energie unterstützt werden. Plastifiziertes Material kann durch Rollen und Kneten agglomeriert werden, geschmolzenes Material wird dann durch geeignete Lochplatten in Strängen extrudiert. Nach dem Abkühlen kann das Produkt auf die gewünschte Granulatgröße zerkleinert werden. Abtrennungen und Rückführungen in den einzelnen Verfahrensstufen gewährleisten ein einheitliches, staubarmes Granulat 20.

Die Größe dieser Granulate wird jeweils so gewählt, daß das Produkt ohne weitere Vorbehandlung mit den Erzen eines Hochofenprozesses gemischt bzw. direkt in die Öfen der Chromproduktion eingeschleust werden kann. Bei diesem Prozeß werden die organischen Anteile (Folie und Lacke) verbrannt und ersetzen damit einen Teil des erforderlichen Brennstoffes (thermische Verwertung). Die anorganischen Anteile (Chromdioxid-Pigment) werden dabei direkt aufgeschlossen (stoffliche Verwertung) und somit in den Chromkreislauf zurückgeführt.

Eine weitere Methode zur Aufbereitung einer Magnetbandkassette ist das Zersägen des Gehäuses und der Bandspulen mit dem Band. Die Kassette wird hierzu flachliegend der Länge nach in der Horizontal-Mitte getrennt; das Gehäuse zerfällt dabei in zwei Teile und die Spulen einschließlich Magnetband sind jeweils halbiert. Das Magnetband, durch Zersägen schon zerkleinert, wird anschließend von den Gehäuseteilen getrennt.

Die beschriebenen Verfahren und Vorrichtungen sind für jede Art von Magnetbandkassetten mit wenigstens einem Bandwickel oder einer Bandspule zur Aufbereitung geeignet.

Verfahren und Vorrichtungen zum Aufbereiten von Magnetbandkassetten für eine Wiederverwertung der Einzelteile bestehen im Öffnen des Gehäuses, Trennen von Bandwickel(n) und Metallteilen und getrenntem Aufbereiten der Kunststoffteile, des Magnetbandes und der Metallteile. Spezielle Öffnungseinrichtungen bewirken einfache Öffnungsvorgange des Gehäuses. Material-Identifizierungseinrichtungen können die Aufbereitung materialgerecht steuern. Alle Magnetbandkassetten mit wenigstens einer Spule sind aufbereitbar.

## Patentansprüche

1. Verfahren zum Aufbereiten von Magnetbandkassetten für eine Wiederverwendung der Einzelteile, wobei die Magnetbandkassetten im wesentlichen aus einem Kunststoff-Gehäuse, zumindest einem Bandwickel oder einer Bandspule sowie Metallteilen besteht, gekennzeichnet durch folgende Verfahrensschritte:
A) Öffnen des Gehäuses zumindest in der Nähe des Bandwickels oder der Bandspule
B) Trennen des Gehäuses von dem zumindest einen Bandwickel oder der Bandspule
C) Trennen des Bandwickels oder der Bandspule in Magnetband und Wickelkern- oder Spulenkörper
D) Trennen der Metallteile vom Gehäuse und von dem Bandwickel oder der Bandspule.
E) Getrenntes Aufbereiten des Gehäuses, des Magnetbandes und der Metallteile.

2. Verfahren nach Anspruch 1, dadurch gekennzeichnet, daß das Öffnen des Kassettengehäuses durch Entfernen der Verbindungselemente erfolgt.

3. Verfahren nach Anspruch 1 oder 2, dadurch gekennzeichnet, daß das Kassettengehäuse (3) um die Bandwickel oder Bandspulen (21) herum ausgestanzt und die Wickelkerne bzw. Spulenkerne ausgestanzt werden.

4. Verfahren nach Anspruch 1 oder 2 oder 3, dadurch gekennzeichnet, daß das Kassettengehäuse (3) durch Zersägen geöffnet wird.

5. Verfahren nach Anspruch 1 und einem oder mehreren der Ansprüche 2 bis 4, gekennzeichnet durch den zusätzlichen, insbesondere vorgeschalteten, Verfahrensschritt Identifizieren des Gehäuse-Materials.

6. Verfahren nach Anspruch 1 und einem oder mehreren der Ansprüche 2 bis 5, gekennzeichnet durch den zusätzlichen Verfahrensschritt Trennen des Etiketts vom Gehäuse.

7. Vorrichtung zur Durchführung des Verfahrens zur Aufbereitung von Magnetbandkassetten nach Anspruch 1, gekennzeichnet durch die folgenden Einrichtungen:
- zum Öffnen des Gehäuses
- zum Entnehmen der Bandwickel bzw. -spulen aus dem Gehäuse
- zum Trennen der Kassettenteile: Magnetband, Kunststoffteile und Metallteile
- zum Trennen des Bandwickels oder der Bandspule vom Wickelkern bzw. Spulenkern und den Spulenflanschen und
- zum Aufbereiten des Magnetbandes, der Kunststoffteile und der Metallteile.

8. Vorrichtung nach Anspruch 7, dadurch gekennzeichnet, daß die Einrichtung (11) zum Öffnen des Gehäuses (3) aus einer Stanz-Vorrichtung zum Entfernen der Verbindungselemente (25) besteht.

9. Vorrichtung nach Anspruch 7, dadurch gekennzeichnet, daß die Einrichtung (11) zum Öffnen des Gehäuses (3) aus einer Kreisform-Trenn-Einrichtung besteht, deren Kreisform etwas größer ist als der Maximalradius des Bandwickels oder der Bandspule.

10. Vorrichtung nach Anspruch 9, dadurch gekennzeichnet, daß die Kreisform-Trenn-Einrichtung eine Stanz-, Fräs- oder Lochsäge-Einrichtung ist.

11. Vorrichtung nach Anspruch 8, dadurch gekennzeichnet, daß die Einrichtung (11) zum Öffnen der Kassette aus einer Sägeeinrichtung besteht, die die Kassette (5) in zwei etwa gleichgroße Teile zersägt.

12. Vorrichtung nach Anspruch 8 und einem oder mehreren der Ansprüche 9 bis 11, dadurch gekennzeichnet, daß zusätzlich eine Einrichtung (7) zum Prüfen und Identifizieren des Gehäusematerials vorgesehen ist.

13. Vorrichtung nach Anspruch 8 und einem oder mehreren der Ansprüche 9 bis 12, dadurch gekennzeichnet, daß eine Trenneinrichtung (9) für Etiketten (10) vom Gehäuse (3) vorgesehen ist.
